# EUROPÄISCHE PATENTSCHRIFT

(11) **EP 1 866 182 B1**
(45) Veröffentlichungstag und Bekanntmachung des Hinweises auf die Patenterteilung: **14.09.2011**
(21) Anmeldenummer: 06707633.1
(22) Anmeldetag: 22.03.2006
(51) Int. Cl.: B60N 2/56, A44B 18/00, B29C 33/16

(54) **BEFESTGUNGSVORRICHTUNG UND VERFAHREN ZUM HERSTELLEN DERSELBEN**
FIXING DEVICE AND METHOD FOR PRODUCING THE SAME
DISPOSITIF DE FIXATION ET PROCEDE DE PRODUCTION ASSOCIE

(30) Priorität: 02.04.2005 DE 102005015239
(43) Veröffentlichungstag der Anmeldung: 19.12.2007
(73) Patentinhaber: Gottlieb Binder GmbH & Co. KG, 71088 Holzgerlingen (DE)
(72) Erfinder: POULAKIS, Konstantinos, 71157 Hildrizhausen (DE)
(74) Vertreter: Bartels, Martin Erich Arthur
(86) Internationale Anmeldenummer: PCT/EP2006/002624
(87) Internationale Veröffentlichungsnummer: WO 2006/105869

(56) Entgegenhaltungen:
- EP-A- 1 266 794
- WO-A-2004/089689
- DE-A1- 10 039 940
- DE-B3- 10 341 151
- US-A- 4 847 933
- US-A1- 2005 066 505
- US-A1- 2005 200 179
- PATENT ABSTRACTS OF JAPAN Bd. 2000, Nr. 10, 17. November 2000 (2000-11-17) & JP 2000 189281 A (TOYOTA MOTOR CORP; TACHI S CO LTD), 11. Juli 2000 (2000-07-11)

## Beschreibung

Die Erfindung betrifft eine Befestigungsvorrichtung zum Festlegen eines Bauteils in Form einer Lüftereinrichtung an Polsterschäumen von Fahrzeugsitzen gemäß der Merkmalsausgestaltung des Oberbegriffes des Patentanspruches 1.

Moderne und komfortable Fahrzeugsitze verlangen zusehends Ein- oder Anbauteile wie die bereits genannte Lüftereinrichtung oder sonstige Klimaeinrichtungen (Kühlschlangen) zur sinnfälligen Klimatisierung des Sitzes. Darüber hinaus sind gegebenenfalls weitere Bauteile anzubringen, wie Sitzerkennungssysteme, Beschleunigungssensoren für Airbageinrichtungen, Aktuatoren als Kraftübertragungseinrichtungen und dergleichen mehr. Auch ist schon vorgeschlagen worden, insbesondere im Bereich von Kopfstützen Lautsprecher in Polsterschaumteile zu integrieren.

Bei allen diesen Lösungen werden regelmäßig in das bereits hergestellte Schaumteil Ausnehmungen eingeschnitten, und zwar in einer Größe, die dem Einbaumaß des späteren Bauteils als Einbauteil entspricht. Zur Befestigung des Einbauteils im Schaum dient dann regelmäßig ein spezieller Kunststoffklebstoff, der unlösbar das Einbauteil mit dem Schaum verbindet. Ein Ausbau des Einbauteils aus dem Schaum, beispielsweise um im Wartungsfall dieses gegen ein Neugerät zu ersetzen, ist eine Trennung nur zerstörend möglich, bei der regelmäßig Großteile des Schaumaterials mit herausgerissen werden, was den Neueinbau problematisch werden läßt. Auch sind die angesprochenen Kunststoffklebstoffe bei der Verarbeitung häufig nicht unbedenklich, so dass entsprechende Absauganlagen vorzusehen sind, die jedoch wiederum die Herstellkosten erhöhen.

Um diesem Nachteil zu begegnen, ist in der gattungsgemäßen US 2005/0066505 A bereits vorgeschlagen worden, dahingehende Klebstoffverbindungen durch Haftverschlußsysteme ("hook and loop fastners") zu ersetzen. So zeigt diese bekannte Lösung eine Befestigungsvorrichtung zum Festlegen einer Klimaeinrichtung an Polsterschäumen von Fahrzeugsitzen, wobei die Klimaeinrichtung mittels eines Haftverschlußsystems in Bereichen des Sitz- oder Lehnenkissens des Sitzes befestigt werden kann. Dergestalt läßt sich das Bauteil an dem Polsterschaum stationär in einer Anlage halten. Vergleichbar aufgebaute Befestigungsvorrichtungen sind auch Gegenstand der WO 2004/089689, die gemäß einer Ausführungsform nach der Fig.1 a eine anschraubbare Lüfteranordnung als Klimaeinrichtung am seitlichen Holmenrand eines Polsterrahmens für die Rückenlehne eines Fahrzeugsitzes vorsieht.

Eine weitere vergleichbare Befestigungsvorrichtungslösung ist auch durch die nachveröffentlichte US 2005/0200179 A bekannt.

Allen vorstehend genannten Lösungen ist gemeinsam, dass zwar eine sichere Anbringung des Bauteils im oder am Schaum erreicht ist; allein die hiermit in Verbindung stehenden Montage- und Wartungsvorgänge sind mit einem zeit- und kostenintensiven Aufwand verbunden, was die bekannten Lösungen teuer in der Herstellung werden läßt.

Ausgehend von diesem Stand der Technik liegt der Erfindung die Aufgabe zugrunde, die bekannten Lösungen unter Beibehalten ihrer Vorteile, nämlich eine sichere Anbringung des Bauteils im oder am Schaum zu erreichen, dahingehend weiter zu verbessern, dass Montage- und Wartungsvorgänge erleichtert sind und sich darüber hinaus auch die Herstellkosten zum Einbringen von Bauteilen in Schäumen reduzieren lassen. Eine dahingehende Aufgabe löst eine Befestigungsvorrichtung mit den Merkmalen des Patentanspruches 1 in seiner Gesamtheit.

Dadurch, dass gemäß dem kennzeichnenden Teil des Patentanspruches 1 die Lüftereinrichtung als Bauteil ein antreibbares Lüfterrad aufweist, das von einem rechteckförmigen Lüftergehäuse als Abdeckung umgeben ist, die an zwei diametral einander gegenüberliegenden Seiten ein Haftverschlußteil aufweist, und dass mehr Haftverschlußteile mit dem Schaum verbunden als zugeordnete Haftverschlußteile am Bauteil vorhanden sind, ist eine lösbare Verbindung zwischen Bauteil und Schaum gegeben, und unter Verzicht von speziellen, gegebenenfalls umweltmäßig schädlichen Klebstoffen läßt sich von Hand mit geringen Eingreifkräften sowohl das Bauteil bei einer Erstausrüstung mit dem Schaum verbinden als auch später bei Wartungs- oder Reparaturvorgängen gegen ein entsprechendes Neubauteil austauschen. Ferner läßt sich durch den Einsatz von Haftverschlußteilen, wie sie unter der Marke "Kletten^{®}-Haftverschluß" bekannt sind, das Einbauteil an einen zuordenbaren Schaum, insbesondere in Form eines Polsterschaums, festlegen, wodurch sich die Herstellkosten gegenüber der angesprochenen Klebstoffverarbeitung senken lassen.

Das genannte Bauteil in Form der Lüftereinrichtung läßt sich als Einbauteil konzipieren, das zumindest teilweise von dem Schaum eingefaßt ist, wobei mittels des Haftverschlusses das Einbauteil im Schaum in einer Einbaulage als Anlage gehalten ist. Dergestalt läßt sich das Bauteil platzsparend im Schaummaterial, vorzugsweise ohne Überstand, unterbringen.

Bei einer geänderten Ausführungsform ist vorzugsweise vorgesehen, dass das Bauteil als Anbauteil konzipiert ist, das mittels des Haftverschlusses zumindest teilweise in Anlage ist mit einer Außenfläche des Schaumes. Vorzugsweise ist dabei ferner vorgesehen, dass das Anbauteil nach außen hin mit einer Abdeckung versehen ist, die mindestens eine Zugangsöffnung aufweist. Dergestalt läßt sich das Bauteil von außen her auf das Polsterschaummaterial aufsetzen, so dass die Dicke des Schaummaterials klein gehalten werden kann. Auch lassen sich dergestalt bereits in Benutzung genommene Fahrzeugsitze mit sinnfälligen Anbauteilen in Form der Lüftereinrichtung nachrüsten. ,

Vorzugsweise kommt bei der erfindungsgemäßen Lösung ein Herstellverfahren zum Tragen, bei dem zum Herstellen eines Aufnahmeraumes im Schaum ein der Geometrie des Aufnahmeraumes angepaßtes Formteil in eine Schäumform eingebracht wird, das über magnetische Einlegeteile verfügt, an denen das jeweilige Haftverschlußteil derart anhaftet, dass über seine Rückseite eine Verbindung mit dem Schaum erfolgt, und die vorderseitig angeordneten Verhakungsteile bleiben zumindest größtenteils schaumfrei. Dergestalt läßt sich beim Einschäumen in der Schäumform der spätere Aufnahme- oder Anlageraum für das Bauteil unmittelbar erzeugen, ohne dass man erst später noch, wie im Stand der Technik, Einschnitte zur Ausnehmung des Schaummaterials vorzunehmen hat. Dies hilft deutlich die Herstellkosten zu reduzieren. versehen.

Weitere vorteilhafte Ausführungsformen der erfindungsgemäßen Befestigungsvorrichtung sind Gegenstand der sonstigen Unteransprüche.

Im folgenden wird die erfindungsgemäße Befestigungsvorrichtung anhand eines Ausführungsbeispiels nach der Zeichnung näher erläutert. Dabei zeigen in prinzipieller und nicht maßstäblicher Darstellung die
- Fig. 1: in der Art einer perspektivischen Zusammenbaudarstellung ein Ausführungsbeispiel mit einem Einbauteil in Form einer Lüftereinrichtung sowie ein zugeordnetes Schaumteil mit Aufnahmeraum für das in den Schaum einzusetzende Einbauteil;
- Fig. 2: in perspektivischer Draufsicht ein Werkzeug zum Herstellen der Befestigungsvorrichtung nach Fig. 1;
- Fig. 3: in der Art einer perspektivischen Zusammenbaudarstellung ein nicht zur Erfindung gehörendes Ausführungsbeispiel, bei dem ein Anbauteil in Form einer Lüftereinrichtung von außen her auf das Schaum- teil einer Rückenlehne aufsetzbar ist.

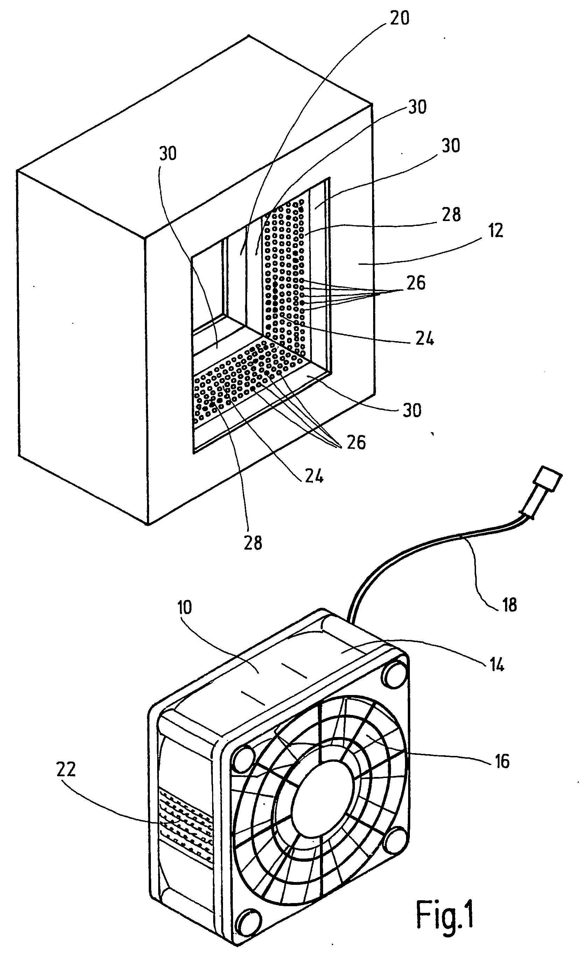

Die in Fig. 1 gezeigte Ausführungsform einer Befestigungsvorrichtung dient dem Festlegen von Einbauteilen in Schäumen, wobei die Ausführungsform nach der Fig.1 als Einbauteil eine Lüftereinrichtung 10 zeigt, die in einen Polsterschaum 12 eines nicht näher dargestellten Fahrzeugsitzes einsetzbar sein soll. Der Polsterschaum 12 nach der Fig.1 ist im wesentlichen als quadratischer Block der Einfachheit halber wiedergegeben und stellt mithin nur einen abschnittsweisen Ausschnitt aus einem größeren Polsterschaumteil dar, wie es üblicherweise das Sitzteil oder das Rückenlehnenteil eines Kraftfahrzeugsitzes bildet. Ferner ist der Polsterschaum 12 ohne Bezugsmaterial gezeigt. Die in Bereichen von Fahrzeugsitzen eingesetzten Polsterschäume bestehen regelmäßig aus in Formteilen schäumbarem PU-Schaum.

Die Lüftereinrichtung 10 weist ein rechteckförmiges Lüftergehäuse 14 vorzugsweise aus Kunststoffmaterial auf, in dem ein von einem nicht näher dargestellten Elektromotor antreibbares Lüfterrad 16 angeordnet ist. Der dahingehende, nicht näher dargestellte Elektromotor ist über ein elektrisches Verbindungskabel 18 an eine nicht näher dargestellte Stromversorgungsquelle zu dessen Betrieb anschließbar. In dem Polsterschaum 12 ist ein rechteckförmiger Aufnahmeraum 20 eingebracht, der von seiner Geometrie her, insbesondere von seiner Außenkontur, etwas größer gewählt ist als der Außenumfang des Lüftergehäuses 14. Das Einbauteil in Form der Lüftereinrichtung 10 soll im Einbauzustand vom Schaum 12 eingefaßt sein und weist demgemäß mindestens ein Haftverschlußteil 22 auf in Form eines Flausch- oder Wirrfasermaterials. Das dahingehende Haftverschlußteil 22 bildet im Einbauzustand des Einbauteils mit einem korrespondierenden Haftverschlußteil 24, das mit dem Schaum 12 fest verbunden ist, einen lösbaren Haftverschluß aus, den man auch mit "Klettenhaftverschluß" bezeichnet. Dergestalt läßt sich über die beiden Haftverschlußteile 22,24, die einen lösbaren Verschluß bilden, das Einbauteil in Form der Lüftereinrichtung 10 im Schaum 12 stationär in einer Einbaulage halten.

Wie die Fig.1 des weiteren zeigt, ist das jeweilige, mit dem Schaum 12 verbundene Haftverschlußteil 24 flächenmäßig größer ausgebildet als das zugeordnete Haftverschlußteil 22 des Einbauteils, hier in Form der Lüftereinrichtung 10. Dergestalt ist eine erhöhte Verbindungssicherheit erreicht und bei der Ausführungsform sind mehr Haftverschlußteile 22 mit dem Schaum 12 verbunden als zugeordnete Haftverschlußteile 22 am Einbauteil vorgesehen sind. Insbesondere weist der Aufnahmeraum 20 in einer Ebene paarweise diametral einander gegenüberliegende Haftverschlußteile 24 auf, so dass der Aufnahmeraum 20 insbesondere an seinem vorderen Ende mit insgesamt vier Haftverschlußteilen 24 versehen ist, wohingegen das Lüftergehäuse 14 nur zwei einander diametral gegenüberliegende Haftverschlußteile 22 aufweist, was insoweit die Möglichkeit eröffnet, in beliebig gedrehter Anordnung zur Lüfterachse des Lüfterrades 16 einen Einbau der Lüftereinrichtung 10 im Aufnahmeraum 20 des Polsterschaumes 12 vorzusehen.

Das Haftverschlußteil 24 des Schaumes 12 besteht aus einem sog. Mikrohaftverschlußteil mit einzelnen, auf einer Seite angeordneten Verhakungselementen 26 in der Art von Verhakungspilzen. Diese sind auf einem Trägerband 28 angeordnet, das auf seiner Rückseite ein Abdeckband 30 aufweist, das bei der gezeigten Ausführungsform beidseitig über den jeweils freien Seitenrandbereich des Trägerbandes 28 vorsteht. Das genannte Abdeckband 30 ist zumindest teilweise mit ferromagnetischen Bestandteilen versehen oder weist ansonsten eine Magneteinrichtung (nicht dargestellt) auf, deren Funktion noch nachfolgend näher erläutert werden wird. Dahingehende Haftverschlußteile 24 sind in verschiedenen Ausführungsbeispielen in der DE 100 39 940 offenbart sowie in der DE 103 41 152. Eine weitere Ausführungsform ist in der DE 103 41 151 aufgezeigt.

Zum lösbaren Einbau der Lüftereinrichtung 10 im Polsterschaum 12 wird die Lüftereinrichtung 10 von Hand in den Aufnahmeraum 20 eingesetzt, wobei mit geringen Betätigungskräften eine unmittelbare Verhakung der korrespondierenden Haftverschlußteile 22,24 miteinander stattfindet. Die Lüftereinrichtung 10 braucht dann nur noch über das Verbindungskabel 18 elektrisch an eine Versorgungsquelle angeschlossen zu werden, um dergestalt die Klimatisierung des Schaumes 12 eines Fahrzeugsitzes sicherzustellen. Für einen Ausbauvorgang genügt es, die Lüftereinrichtung 10 durch Lösen des Haftverschlusses aus dem Aufnahmeraum 20 wieder zu entfernen. Anstelle der gezeigten Lüftereinrichtung 10 können eine Vielzahl von Einbauteilen derart an Schäumen 12 festgelegt werden.

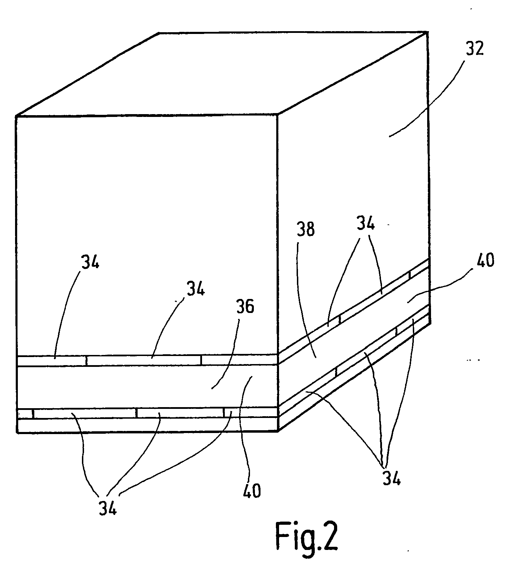

Zum Herstellen des Aufnahmeraumes 20 nach der Fig.1 dient das in Fig.2 dargestellte kubische Formteil 32, das in eine nicht näher dargestellte Schäumform zum Herstellen des Polsterschaumes 12 einlegbar ist. Das Formteil 32 weist in Blickrichtung auf die Fig.2 gesehen an seinem unteren Ende magnetische Einlegteile 34 auf, die als Magnetstäbe in den Metallblock als Formteil 32 einlegbar sind. Das jeweilige Haftverschlußteil 24 wird dann derart an den jeweiligen Haltebereichen 36,38 fixiert, dass die Vorderseite mit den Verhakungselementen 26 in Anlage ist mit der Anlagefläche 40 eines jeden Haltebereiches 36,38 und die vorstehenden Ränder des Abdeckbandes 30 übergreifen die magnetischen Einlegeteile 34 derart, dass zum einen eine magnetische Verhaftung stattfindet und zum anderen die Verhakungselemente 26 gegenüber dem Eindringen von Schaummaterial abgedichtet sind. Wird der Polsterschaum 12 nach dem Schäumvorgang anschließend aus der Form entnommen, hat das Formteil 32 den Aufnahmeraum 20 hergestellt und das jeweilige Abdeckband 30 eines Haftverschlußteils 24 ist mit dem Schaummaterial längs seiner Rückseite fest verbunden und die nach vorne vorstehenden Verhakungselemente 26 in Form von Einzelpilzköpfen stehen für den Eingriff mit dem korrespondierenden Haftverschlußteil 22 am jeweiligen Einbauteil zur Verfügung. Es liegt noch im Bereich der erfindungsgemäßen Lösung, die Haftverschlußteile 22 des Einbauteils im Polsterschaum 12 vorzusehen und die dortigen Haftverschlußteile 24 am Einbauteil. Auch sind Mischformen denkbar, bei denen in einem Teil sowohl Haftverschlußteile 22 der einen Art als auch Haftverschlußteile 24 der anderen Art Verwendung finden.

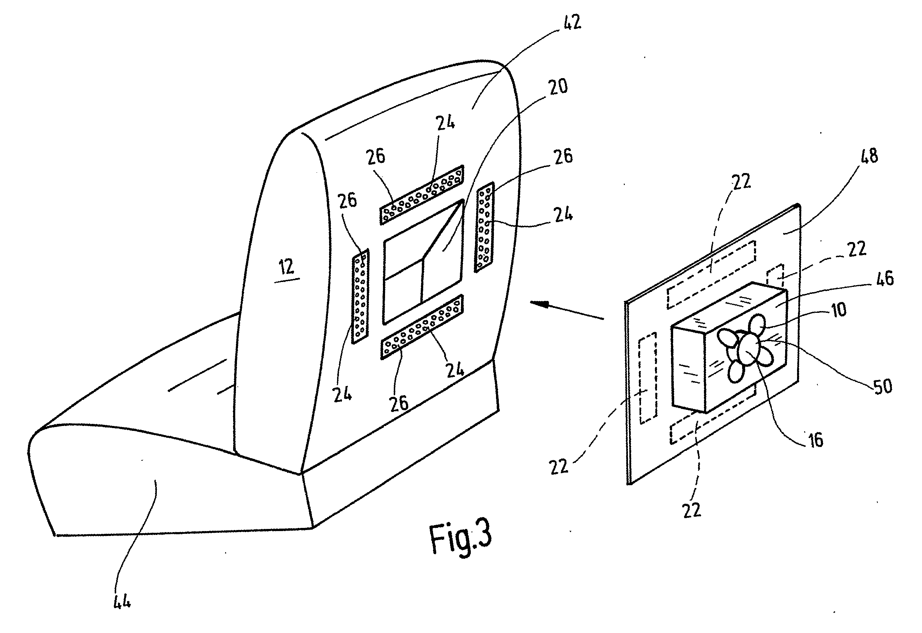

Das nachfolgende, nicht zur Erfindung gehörende Ausführungsbeispiel nach der Fig. 3 wird nur noch insoweit erläutert, als es sich wesentlich von der vorangegangenen Ausführungsform unterscheidet. Dabei werden dieselben Bauteile mit denselben Bezugszeichen versehen, wie bei der vorangegangenen Ausführungsform und die insoweit getroffenen Ausführungen gelten dann auch für die weitere nachstehend beschriebene Ausführungsform.

Die Fig. 3 zeigt die rückwärtige Ansicht einer Rückenlehne 42, an die sich nach vorne hin ein übliches Sitzteil 44 eines Fahrzeug- oder Fluggastsitzes anschließt. Die dahingehenden Sitzkomponenten sind nur prinzipiell und in Form der Polsterschäume 12 dargestellt. Im oberen Drittel des Polsterschaumes 12 der Rückenlehne 42 ist wiederum ein im wesentlichen rechteckförmiger Aufnahmeraum 20 angeordnet, der nach außen hin und unter Abstand von vier streifenförmigen einzelnen Haftverschlußteilen 24 umfasst ist. Diese sind wiederum mit ihrer Rückseite fest im Polsterschaummaterial 12 verankert und ihre Verhakungs- oder Pilzelemente 26 stehen nach außen hin vom Polsterschaummaterial 12 freigehalten vor. Das anzubringende Bauteil in Form der Lüftereinrichtung 10 ist als Anbauteil konzipiert und weist eine Abdeckung 46 auf, die das eigentliche Lüfterrad 16 umfasst und stirnseitig in eine Anlageplatte 48 ausmündet.

An der freien Stirnseite der dahingehenden rechteckförmigen, insbesondere quadratischen, Anlageplatte 48 sind wiederum vier Haftverschlußteile 22 streifenförmig derart angeordnet, dass in der Anbaulage die dahingehenden Haftverschlußteile 22 mit den Haftverschlußteilen 24 am Polsterschaummaterial 12 den jeweiligen Haftverschluß lösbar ausbilden. Vorzugsweise bilden dabei die Haftverschlußteile 22 wiederum ein Schlaufen- oder Wirrfasermaterial aus. Die Festlegung ist jedenfalls derart konzipiert, dass unter einem gewissen Andruck die Haftverschlußteile 22, 24 fest miteinander interagieren und das randseitige Schaummaterial dichtet die dahingehende Anlage ab, so dass über eine Zugangsöffnung 50 Luft ungehindert von außen in den Aufnahmeraum 20 einströmen kann. Es kann auch vorgesehen sein, um die Rückseite des Lüfterrades 16 abzudecken, die dahingehende Frischluftzufuhr an einer Randseite der Abdeckung 46 vorzusehen (nicht dargestellt). Dergestalt läßt sich auch nachträglich ein Bauteil von außen her mit Sitzkomponenten verbinden und vorzugsweise ist ferner vorgesehen, dass ein nicht näher dargestelltes Polsterbezugmaterial die angebaute Lüfteranlage von außen her umfasst, um dergestalt einer möglichen Verletzungsgefahr zu begegnen.

Die erfindungsgemäße Befestigungsvorrichtung ist universell einsetzbar und läßt sich herstelltechnisch günstig verwirklichen. Insbesondere ist mit der Befestigungsvorrichtung ein lang andauernder Einsatz von Schäumen möglich, auch wenn die anzubringenden Bauteile im Zuge von Wartungs- oder Reparaturvorgängen häufiger zu wechseln wären.

## Patentansprüche

1. Befestigungsvorrichtung zum Festlegen eines Bauteils in Form einer Lüftereinrichtung (10) an Polsterschäumen (12) von Fahrzeugsitzen, wobei das Bauteil mindestens ein Haftverschlußteil (22) aufweist, das mit mindestens einem korrespondierenden Haftverschlußteil (24), das mit dem Polsterschaum (12) verbunden ist, einen lösbaren Haftverschluß bildet, mit dem das Bauteil an dem Polsterschaum (12) stationär in einer Anlage gehalten ist, wobei das Bauteil als Einbauteil konzipiert ist, das zumindest teilweise von dem Schaum (12) eingefaßt ist, wobei mittels des Haftverschlusses das Einbauteil im Schaum (12) in einer Einbaulage als Anlage gehalten ist, oder wobei das Bauteil als Anbauteil konzipiert ist, das mittels des Haftverschlusses zumindest teilweise in Anlage ist mit einer Außenfläche des Schaumes (12), **dadurch gekennzeichnet, dass** die Lüftereinrichtung (10) als Bauteil ein antreibbares Lüfterrad (16) aufweist, das von einem rechteckförmigen Lüftergehäuse (14) als Abdekkung umgeben ist, die an zwei diametral einander gegenüberliegenden Seiten ein Haftverschlußteil (22) aufweist, und dass mehr Haftverschlußteile (24) mit dem Schaum (12) verbunden als zugeordnete Haftverschlußteile (22) am Bauteil vorhanden sind.

2. Befestigungsvorrichtung nach Anspruch 1, **dadurch gekennzeichnet, dass** das Anbauteil nach außen hin mit einer Abdeckung (46) versehen ist, die mindestens eine Zugangsöffnung (50) aufweist.

3. Befestigungsvorrichtung nach Anspruch 1 oder 2, **dadurch gekennzeichnet, dass** das jeweilige, mit dem Schaum (12) verbundene Haftverschlußteil (24) flächenmäßig größer, insbesondere länger ausgebildet ist als das zugeordnete Haftverschlußteil (22) des Bauteils.

4. Befestigungsvorrichtung nach einem der Ansprüche 1 bis 3, **dadurch gekennzeichnet, dass** das Haftverschlußteil (24) des Schaumes (12) ein Pilzverschlußteil und das Haftverschlußteil (22) des Bauteils ein Flausch- oder Wirrfaserteil ist.

5. Befestigungsvorrichtung nach einem der Ansprüche 1 bis 4, **dadurch gekennzeichnet, dass** das Haftverschlußteil (24) mit einem Trägerband (28) mit auf diesem auf einer Seite angeordneten Verhakungselementen (26) versehen ist sowie mit mindestens einem Abdeckband (30), das mindestens einen freien Seitenrandbereich bildet, der sich über den zuordenbaren Längsrand des Trägerbandes (28) hinaus erstreckt, und dass das Abdeckband (30) zumindest teilweise ferromagnetische Eigenschaften aufweist.

## Claims

1. A fastening device for fixing a component in the form of a fan unit (10) to upholstery foams (12) of vehicle seats, the component having at least one adhesive fastener part (22) which with at least one corresponding adhesive fastener part (24) connected to the upholstery foam (12) forms a detachable adhesive fastener with which the component is held stationarily on the upholstery foam (12), in contact, the component being designed as an insert part which is at least partially surrounded by the foam (12), by means of the adhesive fastener the insert part being held in the foam (12) in an installation position in contact, or the component being designed as an attached part which is at least partially in contact with an outer surface of the foam (12) by means of the adhesive fastener, **characterised in that** the fan unit (10) has as a component a driveable fan impeller (16) that is surrounded by a rectangular fan housing (14) as a cover which has an adhesive fastener part (22) on two diametrically opposing sides, and that more adhesive fastener parts (24) are connected to the foam (12) than there are corresponding adhesive fastener part (22) on the component.

2. The fastening device according to Claim 1, **characterised in that** the attached part is provided to the outside with a cover (46) which has at least one access opening (50).

3. The fastening device according to Claim 1 or 2, **characterised in that** the respective adhesive fastener part (24) connected to the foam (12) is made larger in area, in particular is longer than the corresponding adhesive fastener part (22) of the component.

4. The fastening device according to any of Claims 1 to 3, **characterised in that** the adhesive fastener part (24) of the foam (12) is a mushroom fastener part, and the adhesive fastener part (22) of the component is a fleece or matted fibre part.

5. The fastening device according to any of Claims 1 to 4, **characterised in that** the adhesive fastener part (24) is provided with a carrier strip 28 with interlocking elements (26) disposed on the latter on one side and with at least one cover strip (30) which forms at least one free side edge region which extends over the corresponding longitudinal edge of the carrier strip (28), and that the cover strip (30) has at least partially ferromagnetic properties.

## Revendications

1. Dispositif de fixation pour la fixation d'un élément sous la forme d'une dispositif (10) de ventilateur sur des mousses (12) de rembourrage de sièges de véhicule, dans lequel l'élément comporte au moins une partie (22) de fermeture auto-agrippante, qui forme, avec au moins une partie (24) correspondante de fermeture auto-agrippante, qui est reliée à la mousse (12) de rembourrage, une fermeture auto-agrippante, qui peut être ouverte et par laquelle l'élément est maintenu en une position fixe sur la mousse (12) de rembourrage, l'élément étant conçu sous la forme d'une pièce de montage, qui est enchâssée, au moins en partie, par la mousse (12), dans lequel, au moyen de la fermeture auto-agrippante, la pièce de montage est maintenue dans la mousse (12) en une position de montage en tant que pièce jointe ou dans lequel l'élément est conçu comme pièce de montage, qui, au moyen de la fermeture auto-agrippante, est mise, au moins en partie, en contact avec une surface extérieure de la mousse (12), **caractérisé en ce que** le dispositif de ventilateur comporte comme élément une roue (16) de ventilateur, qui peut être entraînée et qui est entourée par un carter (14) de ventilateur rectangulaire en tant que capot, qui a une partie (22) de fermeture auto-agrippante sur deux côtés diamétralement opposés l'un à l'autre, et **en ce qu'**il y a plus de parties (24) de fermeture auto-agrippante reliées à la mousse (12) que de parties (22) de fermeture auto-agrippante associées à l'élément.

2. Dispositif de fixation suivant la revendication 1, **caractérisé en ce que** la pièce de montage est pourvue vers l'extérieur d'un capot (46), qui a au moins une ouverture (50) d'accès.

3. Dispositif de fixation suivant la revendication 1 ou 2, **caractérisée en ce que** la partie (247) de fermeture auto-agrippante respective, qui est reliée à la mousse (12), est en surface plus grande, notamment plus longue, que la partie (22) de fermeture auto-agrippante associée de l'élément.

4. Dispositif de fixation suivant l'une des revendications 1 à 3, **caractérisé en ce que** la partie (24) de fermeture auto-agrippante de la mousse (12) est une partie de fermeture en champignon et la partie (22) de fermeture auto-agrippante de l'élément est une partie de tissu à longs poils ou à fibres emmêlées.

5. Dispositif de fixation suivant l'une des revendications 1 à 4, **caractérisé en ce que** la partie (24) de fermeture auto-agrippante est pourvue d'un ruban (28) de support, ayant des éléments (26) d'accrochage qui sont disposés sur une face, ainsi que d'au moins un ruban (30) de recouvrement, qui forme au moins une zone de bord marginale libre qui s'étend au-delà du bord longitudinal pouvant être associé du ruban (28) de support, et **en ce que** le ruban (30) de recouvrement a, au moins en partie, des propriétés ferromagnétiques.
